# EUROPEAN PATENT SPECIFICATION

(11) **EP 1 661 925 B1**
(45) Date of publication and mention of the grant of the patent: **20.08.2008**
(21) Application number: 05025444.0
(22) Date of filing: 22.11.2005
(51) Int. Cl.: C08F 216/06, C08F 226/02, C08F 261/04, C08F 271/00, B32B 27/30

(54) **Water soluble resin composition, gas barrier film and packaging material employing it**
Wasserlösliche Harzzusammensetzung, Gassperrfilm und diesen verwendendes Verpackungsmaterial
Composition de résine soluble dans l'eau, film imperméable au gaz et matériau d'emballage l'utilisant

(30) Priority: 26.11.2004 JP 2004342880
(43) Date of publication of application: 31.05.2006
(73) Proprietor: Mitsubishi Chemical Corporation, Minato-ku Tokyo 108-0014 (JP)
(72) Inventor: Aoyama, Masato c/oMitsubishi Chemical Group Science, Yokkaichi-shi Mie (JP); Sawa, Kouhei, Yokkaichi-shi Mie (JP)
(74) Representative: TER MEER - STEINMEISTER & PARTNER GbR

(56) References cited:
- EP-A- 0 606 889
- WO-A-98/04411
- MASATO AOYAMA, MASAYUKI TOMIDA: "Application of (vinylalcohol)-(vinylamine) copolymer" AMERICAN CHEMICAL SOCIETY POLYMER PREPRINTS, vol. 45, no. 1, March 2004 (2004-03), pages 853-854, XP009062711

## Description

The present invention relates to a water soluble resin composition, and a gas barrier film and a packaging material employing it.

Packaging materials to be used for packaging food, medicine, etc. are required to prevent denaturation of their contents. For food application, they are required to suppress oxidation and denaturation of proteins, fats and fatty oils and to maintain taste and freshness, and for medicine application, they are required to suppress denaturation of effective components to maintain the efficiency and to maintain an asceptic state. Accordingly, in order to prevent influences by oxygen, water vapor and other gases which denature the content, which pass through conventional packaging materials, packaging materials having gas barrier properties, which inhibit such gases from passing therethrough have been desired.

Accordingly, heretofore, gas barrier films including aluminum foils and metal deposited films of e.g. aluminum, films made of resins which are generally considered to have high gas barrier properties, such as a polyvinylidene chloride resin (hereinafter referred to as PVDC), a polyvinyl alcohol (hereinafter referred to as PVA) and an ethylene vinyl alcohol copolymer (hereinafter referred to as EVOH), and films having such resins laminated or coated on polymer resin substrates, have been commonly employed.

However, although aluminum foils and metal deposited films are excellent in gas barrier properties, they have such drawbacks that the contents can not visually be confirmed through the packaging material, that they have to be treated as noncombustible at the time of disposal after use, and that they are relatively expensive.

Further, a method of employing PVDC has such drawbacks that use of an organic solvent is inevitable since PVDC is soluble only in an organic solvent, and accordingly a special solvent recovery apparatus has to be provided in coating and drying steps. Although the problem by use of an organic solvent is solved by employing a dispersing agent to disperse PVDC in water to form an emulsion, the dispersing agent used will remain in a film, which decreases the gas barrier properties. Accordingly, a water soluble resin composition having gas barrier properties, which employs no organic solvent nor dispersing agent, has been desired. Further, possibility of a film employing PVDC generating harmful substances at the time of disposal and burning has been pointed out.

On the other hand, although gas barrier films employing PVA or EVOH are preferred from such a viewpoint that no organic solvent nor dispersing agent is employed, they have such a drawback that their gas barrier properties remarkably decrease in high humidity. PVA and EVOH are considered to exhibit gas barrier properties by crystal structures formed by hydrogen bonds of hydroxyl groups in such compounds, and in high humidity, the hydrogen bonds are destroyed and the crystal structures are loosened, whereby the gas barrier properties decrease.

For example, it has been attempted to obtain a film having improved gas barrier properties in high humidity by applying a resin composition obtained by polycondensation of a mixture comprising PVA or EVOH, an alkoxysilane and a silane coupling agent by a sol-gel method to a thermoplastic resin film, followed by drying by heating (JP-A-4-345841 (Japanese Patent No. 2556940)), JP-A-8-099390 (Japanese Patent No. 2880654)). However, the resin composition tends to gelate shortly after mixing and can not be applied any more, and accordingly the usable life of the composition tends to be short, and the composition tends to be difficult to handle. Accordingly, a water soluble resin composition exhibiting gas barrier properties, which employs no organic solvent nor dispersing agent, has been desired.

On the other hand, for another application such as for a paper strengthening agent, a method of employing a cross-linked PVA has been employed for the purpose of increasing water resistance of a film made of PVA so that the film is less likely to be washed away. For example, a cross-linking method employing an isocyanate compound or boric acid has been known. However, an isocyanate compound is highly toxic, and cross-linking properties of boric acid are low. Accordingly, it has been attempted to expand the range of choices for the cross-linking method by employing a copolymer having PVA moieties and other units instead of PVA.

For example, U.S.P. 5,519,093 (JP-A-7-304833) discloses a polymer obtained by hydrolyzing a polymer of a vinylamide with a vinyl ester monomer and then at least partially adding primary amine groups. Although it discloses that such amine groups can react with various functional groups, specifically, only reactivity of amine groups with an epoxy resin is disclosed. Further, a water resistant composition comprising a denatured poly(vinyl alcohol) having primary amino groups or primary ammonium bases in its molecule, and a water resistance-imparting agent reactive with such groups (JP-A-61-211368 (JP-B-4-79377)), an adhesive comprises two substances i.e. PVA having primary and/or secondary amino groups, and a polyisocyanate or an aldehyde (JP-A-10-121016), a creeping adhesive comprising PVA having primary or secondary amino groups in its polymer main chain and a zirconium compound or a dialdehyde as a cross linker (EP743172 A1 Publication), etc, have been proposed. Further, a polymer film has been proposed, obtained by applying a mixture comprising a (vinyl alcohol)-(vinylamine) copolymer, an aldehyde-containing cross linker and a cross-linking accelerating acid catalyst to at least one surface of a polyolefin substrate. Further, it has been disclosed that such a film has oxygen barrier properties (U.S.P. 5,776,618 (Japanese Patent No. 3260384)). A composition comprising a vinyl alcohol polymer having amino groups and a water resistance-imparting agent such as a multiepoxy compound, an aldehyde compound or a multiisocyanate compound has also been proposed (U.S.P. 5,900,463 (Japanese Patent No. 3618526)). However, all the cross linkers such as an isocyanate, an aldehyde and an epoxy used in such publications are highly toxic compounds, and they can hardly be employed for gas barrier films to be used for packaging materials for food and medicine in view of safety. However, such compounds have a high cross-linking reaction rate, and their usable life is limited.

Further, several attempts have been made to employ a cross-linked (vinyl alcohol)-(vinylamine) copolymer so as to improve strength characteristics of paper (U.S.P. 5,281,307 (JP-A-6-235191)). This publication discloses a process of adding a (vinyl alcohol)-(vinylamine) copolymer to paper stock in paper making process, and adding a cross linker capable of cross-linking the copolymer in a drying step in the paper making process. Although various cross linkers are mentioned, specifically used is only glyoxal. Further, it is also disclosed that urea-formaldehyde and melamine-formaldehyde resins are less and less used as a cross linker.

A method for manufacturing tissue paper, employing a resin mixture comprising a (vinyl alcohol)-(vinylamine) copolymer and glutaraldehyde, glyoxal or epichlorohydrin (U.S.P. 5,374,334), and a resin composition obtained by reacting epichlorohydrin with a mixture comprising a (vinyl alcohol)-(vinylamine) copolymer and a polyaminoamine, and an adhesive and a paper strengthening agent employing it (U.S.P. 5,994,449) have also been proposed. However, in U.S.P. 5,994,449, the polyaminoamine resin is used considerably in excess relative to the (vinyl alcohol)-(vinylamine) resin.

However, in these methods also, highly toxic epichlorohydrin is required to be reacted as a cross linker at a final stage, and a problem in safety remains. Therefore, it has been desired to obtain gas barrier films and packaging materials with high safety, which have high gas barrier properties even in high humidity and which are easily produced, and resin compositions for the production.

Accordingly, an object of the present invention is to provide a water soluble resin composition with high safety, which is easily handled. Further, another object of the present invention is to obtain a gas barrier film and a packaging material with high safety, which have high gas barrier properties even in high humidity and which are easily produced.

Namely, it is an object of the present invention to provide a water soluble resin composition containing a (vinyl alcohol)-(vinylamine) copolymer, which has high safety and which can cross-link the (vinyl alcohol)-(vinylamine) copolymer by easy handling, and its production process. Another object of the present invention is to provide a gas barrier film with high safety, which has high gas barrier properties even in high humidity and which is easily produced, and a packaging material employing such a gas barrier film.

The present inventors have already proposed water soluble resin compositions comprising a (vinyl alcohol)-(vinylamine) copolymer and a formamidated poly(vinyl alcohol), an acetoacetylated poly(vinyl alcohol), an alternating copolymer of methyl vinyl ether with maleic anhydride, and the like, and disclosed that such compositions are capable of cross-linking and capable of forming a film, in American Chemical Society, Polymer Preprints, 2004, Vol. 45, No. 1, page 853. These compositions are expected to be less toxic, and as a result of further studies by the present inventors, it was found that a water soluble resin composition having a specific composition, containing a (vinyl alcohol)-(vinylamine) copolymer and a cross linker having functional groups capable of reacting with amino groups, exhibits a specific change of viscosity in a heated state, and is a water soluble resin composition, the usable life of which is longer and which is easily used. Further, they have found that the above objects can be achieved by a gas barrier film formed by applying an aqueous solution of the above water soluble resin composition to a polymer resin substrate, followed by drying to form a film. The present invention has been accomplished on the basis of these discoveries.

Namely, the present invention resides in a water soluble resin composition containing a (vinyl alcohol)-(vinylamine) copolymer having units represented by the formulae (I) and (II) (hereinafter referred to as vinyl alcohol units (I) and vinylamine units (II)) and a cross linker having functional groups capable of reacting with amino groups, wherein when an aqueous solution containing the water soluble resin composition is prepared to be an aqueous solution having a concentration of the copolymer of 10 mass%, the viscosity (the viscosity measured in accordance with ISO 3219 at 25°C ) after the aqueous solution is held at 60°C for 3 hours, increases by at least 0.2 time and at most 50 times, based on the viscosity immediately after the preparation:

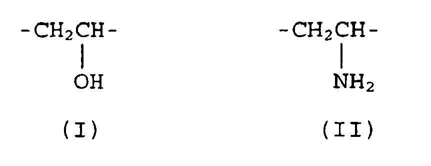

Preferably, in the copolymer, the content ratio of the vinyl alcohol units (I) to the vinylamine units (II) is such that (I):(II)=99:1 to 50:50 (molar ratio). Further, the copolymer may contain units represented by the formula (III):

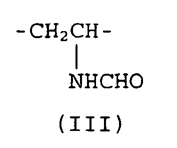

The composition preferably further contains an adjustor of reaction speed.

Further, preferably, the cross linker has, in one molecule, at least two functional groups capable of reacting with amino groups, selected from the group consisting of groups formed by a reaction of a secondary amino group with epichlorohydrin, acetoacetyl groups, acid anhydride groups, formamide groups and ester groups.

The present invention further resides in a water-soluble resin composition containing a (vinyl alcohol)-(vinylamine) copolymer having vinyl alcohol units (I) and vinylamine units (II) and a cross linker having at least two functional groups capable of reacting with amino groups of the copolymer, selected from the group consisting of groups formed by a reaction of a secondary amino group with epichlorohydrin, acetoacetyl groups, acid anhydride groups, formamide groups and ester groups, wherein the ratio of the number of the vinylamine units (II) in the copolymer to the total number of the groups formed by a reaction of a secondary amino group with epichlorohydrin, the acetoacetyl groups and the acid anhydride groups in the cross linker is from 10,000:1 to 20:1; and the ratio of the number of the vinylamine units (II) in the copolymer to the number of the formamide groups in the cross linker is from 20:1 to 1:20.

In the present invention, preferably the cross linker is a polyamide-epichlorohydrin resin, and more preferably, the polyamide-epichlorohydrin resin is one obtained by denaturing by epichlorohydrin a polyamide formed by copolymerizing adipic acid with diethylenetriamine.

A preferred process for producing such a water soluble resin composition comprises denaturing a polyamide formed by copolymerizing adipic acid with diethylenetriamine by epichlorohydrin to obtain the polyamide-epichlorohydrin resin, and mixing it with the (vinyl alcohol)-(vinylamine) copolymer having vinyl alcohol units (I) and vinylamine units (II).

More preferably, the ratio of the number of the vinylamine units (II) in the copolymer to the number of multiamine moieties in the polyamide-epichlorohydrin resin is from 10,000:1 to 20:1.

In the present invention, preferably the cross linker is an acetoacetylated poly(vinyl alcohol), more preferably the ratio of the number of the vinylamine units (II) in the copolymer to the number of acetoacetyl moieties in the acetoacetylated poly(vinyl alcohol) is from 10,000:1 to 20:1.

In the present invention, preferably the cross linker is a copolymer with maleic anhydride, more preferably the copolymer with maleic anhydride is at least one member selected from the group consisting of an alternating copolymer of methyl vinyl ether with maleic anhydride, an alternating polymer of isobutylene with maleic anhydride, and their salts.

More preferably, the ratio of the number of the vinylamine units (II) in the copolymer to the number of maleic anhydride moieties in the copolymer with maleic anhydride is from 10,000:1 to 20:1.

In the present invention, preferably the cross linker is a poly(N-vinylformamide) or its copolymer, more preferably the ratio of the number of the vinylamine units (II) in the copolymer to the number of formamide moieties in the poly(N-vinylformamide) or its copolymer is from 20:1 to 1:20.

In the present invention, preferably the cross linker is a multifunctional ester.

The present invention further resides in a gas barrier film, which is formed by applying an aqueous solution of the above water soluble resin composition to at least one surface of a polymer resin substrate, followed by drying by heating to form a film. Preferably, the polymer resin substrate is made of a polyethylene terephthalate or a polyolefin.

The present invention still further resides in a packaging material comprising the above gas barrier film.

According to the present invention, a water soluble resin composition containing a (vinyl alcohol)-(vinylamine) copolymer, which has high safety and which can cross-link the (vinyl alcohol)-(vinylamine) copolymer, can be provided. The resin composition of the present invention also has such advantages that its reaction rate is relatively low, its usable life is long, and it is easily handled.

Further, by using the composition of the present invention, which is water soluble, a gas barrier film can be produced without using an organic solvent by simple production installations, and such is preferred also in view of environment and safety. Further, high gas barrier properties will be obtained since no dispersing agent is used.

Such a gas barrier film thus produced and a packaging material employing such a gas barrier film have high gas barrier properties even in high humidity, have high safety and are easily produced, and accordingly it is possible to reduce their production cost.

Now, the present invention will be described in detail with reference to the preferred embodiments.

The water soluble resin composition of the present invention contains a (vinyl alcohol)-(vinylamine) copolymer and a cross linker having functional groups capable of reacting with amino groups. In the present invention, a resin composition which is water soluble means one which is dissolved in an amount of at least 1 mass% in water of 25°C. The resin composition of the present invention is dissolved in water preferably in an amount of at least 3 mass%, more preferably at least 5 mass%.

When an aqueous solution of the composition of the present invention is prepared to be an aqueous solution having a concentration of the copolymer of 10 mass%, the viscosity after the aqueous solution is held at 60°C for 3 hours, increases by at least 0.2 time and at most 50 times, relative to the viscosity immediately after the preparation. Each viscosity is a value measured in accordance with ISO 3219 at 25°C. In such a manner, the increase in viscosity at the time of the cross-linking reaction is suppressed to be within an appropriate range, fluidity will be maintained even after the cross-linking reaction proceeded to a certain extent, and the aqueous solution is easily handled.

The water soluble resin composition of the present invention contains a (vinyl alcohol)-(vinylamine) copolymer as the main component, and preferably at least 80 mass%, more preferably at least 85 mass%, furthermore preferably at least 90 mass%, of the solid content is the (vinyl alcohol)-(vinylamine) copolymer. Further, the composition of the present invention contains a cross linker having functional groups capable of reacting with amino groups of the copolymer.

The water soluble resin composition of the present invention may contain another optional additive such as a pH adjustor, an antifoaming agent, a leveling agent or a preservative within a range of not remarkably impairing the effects of the present invention. For example, in a case where a cross linker having a relatively high reactivity with amino groups is used, it is preferred to use an adjustor of reaction speed in combination, whereby the cross-linking reaction rate can be adjusted more easily and more accurately. In a case where an adjustor of reaction speed is added, its amount is usually from 1 to 100 mol%, preferably from 50 to 100 mol%, more preferably from 70 to 100 mol%, based on the vinylamine units (II).

### 1. (Vinyl alcohol)-(vinylamine) copolymer

The present invention is greatly characterized by employing a (vinyl alcohol)-(vinylamine) copolymer. When a copolymer of vinyl alcohol with vinylamine is employed, since amine moieties have high reactivity, a cross-linking method can be selected from particularly wide ranges, as compared with a case of employing a vinyl alcohol homopolymer.

The (vinyl alcohol)-(vinylamine) copolymer to be used in the present invention has units represented by the formulae (I) and (II) (vinyl alcohol units (I) and vinylamine units (II)):

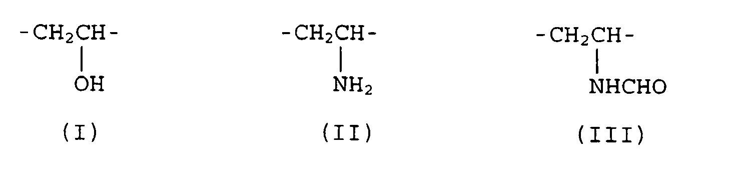

As a method of obtaining such a (vinyl alcohol)-(vinylamine) copolymer, any known method may be used, and the method is not particularly limited. For example, methods as disclosed in U.S.P. 6,559,227 (JP-A-2000-219706), US-A-2005-0043472 (JP-A-2004-51950), U.S.P. 5,300,566 (JP-B-6-51741), EP 0216387 B1 Publication (JP-A-62-74902), etc., may be mentioned.

In the (vinyl alcohol)-(vinylamine) copolymer, the content ratio of the vinyl alcohol units (I) to the vinylamine units (II) is preferably such that (I) : (II)=99:1 to 50:50 (molar ratio). When the proportion of the units (I) is larger than (I):(II)=50:50, the amount of poly(vinyl alcohol) moieties having high gas barrier properties tends to be large, and when a film is to be formed later, the gas barrier properties in a normal state tend to be high. More preferably, the proportion of the units (I) is larger than (I):(II)=55:45, more preferably the proportion of the units (I) is larger than (I):(II)=60:40. On the other hand, when the proportion of the units (II) is larger than (I):(II)=99:1, the amount of amino groups to be reacted with the cross linker tends to increase, and when a film is to be formed later, a film having a high degree of cross-linking will be obtained, whereby gas barrier properties in high humidity tend to be high. More preferably, the proportion of the unit (II) is larger than (I):(II)=97:3, more preferably the proportion of the units (II) is larger than (I):(II)=95:5.

A poly(vinyl alcohol) is well known to have low toxicity, and a (vinyl alcohol)-(vinylamine) copolymer having an analogous structure is also estimated to have low toxicity.

The (vinyl alcohol)-(vinylamine) copolymer of the present invention may contain other units within a range of not remarkably impairing the objects of the present invention. However, it usually contains the vinyl alcohol units (I) and the vinylamine units (II) as the main components, and these units account for preferably at least 85 mol%, more preferably at least 90 mol% of all the units.

The (vinyl alcohol)-(vinylamine) copolymer of the present invention may contain units represented by the formula (III). The content of the units represented by the formula (III) may suitably be selected depending upon the purpose of use, and it is preferably at most 15 mol%, more preferably at most 10 mol%, based on the total amounts of the vinyl alcohol units (I) and the vinylamine units (II). This proportion can be controlled by adjusting the degree of hydrolysis of N-vinylformamide moieties when the (vinyl alcohol)-(vinylamine) copolymer is obtained. Further, usually the units represented by the formula (III) are likely to form when hydrolysis is carried out under milder conditions, and accordingly a copolymer containing such units is likely to be obtained under milder hydrolysis conditions as compared with a copolymer containing no such units, and is easily produced.

The (vinyl alcohol)-(vinylamine) copolymer of the present invention has a molecular weight of usually from 5,000 to 1,000,000 (pullulan standard number average molecular weight by GPC measurement).

### 2. Cross linker

The water soluble resin composition of the present invention further contains a cross linker having functional groups capable of reacting with amino groups of the above (vinyl alcohol)-(vinylamine) copolymer. The structure of the cross linker is not particularly limited so long as the objects of the present invention are achieved, and as a preferred example, a cross linker having at least two functional groups capable of reacting with amino groups of the (vinyl alcohol)-(vinylamine) copolymer, selected from the group consisting of groups formed by a reaction of a secondary amino group with epichlorohydrin, acetoacetyl groups, acid anhydride groups, formamide groups and ester groups.

More preferred is at least one cross linker selected from the group consisting of a polyamide-epichlorohydrin resin, an acetoacetylated poly(vinyl alcohol), a copolymer with maleic anhydride, a poly(N-vinylformamide) or its copolymer, and a multifunctional ester.

Such cross linkers may be used alone or as a mixture of two or more of them in combination.

The water soluble resin composition of the present invention is more preferably such that the ratio of the number of the vinylamine units (II) in the (vinyl alcohol)-(vinylamine) copolymer to the total number of the groups formed by a reaction of a secondary amino group with epichlorohydrin, the acetoacetyl groups, and the acid anhydride groups, in the cross linker is from 10,000:1 to 20:1, and the ratio of the number of the vinylamine units (II) in the (vinyl alcohol)-(vinylamine) copolymer to the number of the formamide groups in the cross linker is from 20:1 to 1:20. If the number of such functional groups is too small as compared with the number of the vinylamine units (II), the number of cross-linking sites tends to be too small, and accordingly when a film is to be formed later, a film having a low degree of cross-linking will be obtained, which has low gas barrier properties in high humidity and is unsuitable as a packaging material. On the other hand, if the number of such functional groups is too large as compared with the number of the vinylamine units (II), the cross-linking reaction will proceed in a moment, whereby the viscosity of the composition tends to be high too quickly, and application on a substrate tends to be difficult.

Now, preferred cross linkers will be explained in further detail below.

### 2-1. Polyamide-epichlorohydrin resin

In the present invention, a polyamide-epichlorohydrin resin is a resin having groups formed by a reaction of a secondary amino group with epichlorohydrin.

The polyamide-epichlorohydrin resin has appeared as a wet paper strengthening agent in the 1950's and been used for sanitary paper such as tissue paper or paper towel, and is also called poly(amidoamine-epichlorohydrin). With respect to the polyamide-epichlorohydrin resin, by the institution of so-called PRTR law (Pollutant Release and Transfer Resister, Law Concerning Reporting, etc. of Releases to the Environment of Specific Chemical Substances and Promoting Improvements in Their Management) in Japan, a low molecular organic chlorine compound remaining in a small amount in a resin aqueous solution has been subjected to regulation, and "products which keeps the PRTR law" with a reduced amount of the low molecular organic chlorine compound as a countermeasure are now on the market (Fine Chemical, published by CMC Publishing Co., Ltd.), March 2004, page 26 (CAS 142:24786)). Further, in the United States, addition to paper and paper boards as a noncontact food additive is admitted. As mentioned above, the polyamide-epichlorohydrin resin has low toxicity. For example, a report has been made, regarding a method of removing a low molecular organic halogen compound contained in a polyamide-epichlorohydrin resin aqueous solution to obtain a purified polyamide-epichlorohydrin resin aqueous solution (JP-A-2000-136245).

As mentioned above, a water soluble resin employing a polyamide-epichlorohydrin resin as a cross linker has low toxicity and is preferred as a composition to be used for gas barrier films and packaging materials, particularly for medicine and food applications.

The polyamide-epichlorohydrin resin can be obtained, in principle, by reacting an epichlorohydrin resin with a copolymer of a dicarboxylic acid with a multiamine compound, and particularly, one obtained by denaturing by epichlorohydrin a polyamide formed by copolymerizing adipic acid with diethylenetriamine, is obtained by a simple production process at a low cost and industrially widely used and preferred. Accordingly, in a case where the polyamide-epichlorohydrin resin is employed as a cross linker, it is preferred to denature a polyamide formed by copolymerizing adipic acid with diethylenetriamine by epichlorohydrin to preliminarily obtain the above polyamide-epichlorohydrin resin, which is mixed with the (vinyl alcohol)-(vinylamine) copolymer containing vinyl alcohol units (I) and vinylamine units (II) to obtain a water soluble resin composition.

There is no established theory as to the practical chemical structure of the polyamide-epichlorohydrin resin, because there is no established theory as to what structure the groups formed by a reaction of a secondary amino group with epichlorohydrin (hereinafter referred to as epichlorohydrin moieties) have. In the above Fine Chemical journal, the following structure is shown with respect to the polyamide-epichlorohydrin resin obtained by denaturing by epichlorohydrin a polyamide formed by copolymerizing adipic acid with diethylenetriamine:

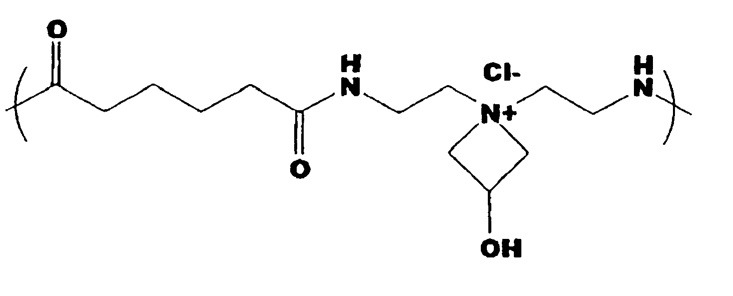

In any case, it is considered that the epichlorohydrin moieties react with vinylamine moieties in the (vinyl alcohol)-(vinylamine) copolymer to cause cross-linking of the (vinyl alcohol)-(vinylamine) copolymer.

Accordingly, the degree of cross-linking of the copolymer is considered to be determined by the ratio of the vinylamine moieties in the (vinyl alcohol)-(vinylamine) copolymer to the epichlorohydrin moieties, i.e. the ratio of the vinylamine moieties in the (vinyl alcohol)-(vinylamine) copolymer to the multiamine moieties. Accordingly, the ratio of the number of the vinylamine units (II) in the (vinyl alcohol)-(vinylamine) copolymer to the number of multiamine moieties (V) in the polyamide-epichlorohydrin resin is preferably from 10,000:1 to 20:1. When the proportion of the units (II) is smaller than (II):(V)=10,000:1, the number of cross-linking sites can be increased, and when a film is to be formed later, a film having a high degree of cross-linking will be obtained, whereby gas barrier properties in high humidity tend to be high. More preferably, the proportion of the units (II) is smaller than (II):(V)=1,000:1, more preferably the proportion of the units (II) is smaller than (II):(V)=800:1.

On the other hand, when the proportion of the units (II) is larger than (II):(V)=20:1, the viscosity of the water soluble resin composition can be appropriately suppressed, whereby application to a substrate tends to be easy, and further, the cross-linking reaction rate can be suppressed to be within an appropriate range, whereby the cross-linking reaction will proceed while fluidity during the reaction is maintained and a state of an easily handled resin composition is maintained. More preferably, the proportion of the units (II) is larger than (II):(V)=50:1, more preferably the proportion of the units (II) is larger than (II):(V)=80:1.

Further, an adjuster of reaction speed may be incorporated.

### 2-2. Acetoacetylated poly(vinyl alcohol)

An acetoacetylated poly(vinyl alcohol) is a poly(vinyl alcohol) having acetoacetyl groups, and its production method is not particularly limited. A method of reacting a poly(vinyl alcohol) with diketene, a method of subjecting a poly(vinyl alcohol) and an acetoacetic ester to an ester exchange reaction, and a method of copolymerizing vinyl acetate with vinyl acetoacetate, may, for example, be mentioned. Among them, a method of reacting a poly(vinyl alcohol) with diketene is preferably employed, since the production process is simple and quality control is easy.

The cross-linking will occur by a reaction of the acetoacetyl groups in the acetoacetylated poly(vinyl alcohol) with amino groups in the (vinyl alcohol)-(vinylamine) copolymer. Accordingly, the degree of cross-linking is considered to be determined by the ratio of the vinylamine moieties in the (vinyl alcohol)-(vinylamine) copolymer to acetoacetyl moieties in the acetoacetylated poly(vinyl alcohol). Accordingly, the ratio of the number of the vinylamine units (II) in the (vinyl alcohol)-(vinylamine) copolymer to the number of the acetoacetyl moieties (VI) in the acetoacetylated poly(vinyl alcohol) is preferably from 10,000:1 to 20:1. When the proportion of the units (II) is smaller than (II) : (VI)=10,000:1, the number of cross-linking sites can be increased, and when a film is to be formed later, a film having a high degree of cross-linking will be obtained, whereby gas barrier properties in high humidity tend to be high. More preferably, the proportion of the units (II) is smaller than (II):(IV)=1,000:1, furthermore preferably the proportion of the units (II) is smaller than (II):(VI)=500:1.

On the other hand, when the proportion of the units (II) is larger than (II):(VI)=20:1, the viscosity of the water soluble resin composition can be appropriately suppressed, whereby application to a substrate tend to be easy, and further, the cross-linking reaction rate can be suppressed to be within an appropriate range, whereby the cross-linking reaction will proceed while fluidity during the reaction is maintained and a state of an easily handled resin composition is maintained. More preferably, the proportion of the units (II) is larger than (II):(VI)=30:1, furthermore preferably the proportion of the units (II) is larger than (II):(VI)=40:1.

Since the acetoacetyl moieties have a relatively high reactivity with amino groups, it is more preferred to add an adjustor of reaction speed. Particularly preferred is a substance having an effect to decrease nucleophilic properties of the vinylamine moieties in the (vinyl alcohol)-(vinylamine) copolymer, such as a compound capable of making the vinylamine moieties be cationic. More specifically, hydrochloric acid, acetic acid or phosphoric acid may, for example, be mentioned. More preferred is hydrochloric acid or acetic acid, and most preferred is acetic acid.

The amount of the adjustor of reaction speed added may be such an amount that nucleophilic properties of the vinylamine moieties can be suitably decreased depending upon the desired reaction rate. It is usually from 1 to 100 mol%, more preferably from 50 to 100 mol%, furthermore preferably from 70 to 100 mol%, based on the vinylamine units (II).

### 2-3. Copolymer with maleic anhydride

In the present invention, a copolymer with maleic anhydride is one obtained by copolymerizing a monomer having maleic anhydride moieties in its main chain or side chains with another monomer, and its structure is not particularly limited. For example, an alternating copolymer of methyl vinyl ether with maleic anhydride, a copolymer of isobutylene with maleic anhydride or a product obtained by denaturing polypropylene with maleic anhydride may, for example, be mentioned. Further, one having part of the maleic anhydride moieties opening to be in a form of a salt such as a quaternary ammonium salt may also be included. The copolymer with maleic anhydride is preferably at least one member selected from the group consisting of an alternating copolymer of methyl vinyl ether with maleic anhydride, an alternating copolymer of isobutylene with maleic anhydride and their salts. They are preferably employed since they have high water solubility and they are sufficiently miscible with the (vinyl alcohol)-(vinylamine) copolymer. Particularly preferred is an alternating copolymer of methyl vinyl ether with maleic anhydride, or one having part of an alternating copolymer of isobutylene with maleic anhydride neutralized by ammonia water.

The cross-linking reaction will occur by a reaction of such maleic anhydride moieties with amino groups in the (vinyl alcohol)-(vinylamine) copolymer. Accordingly, the degree of cross-linking is considered to be determined by the ratio of the vinylamine moieties in the (vinyl alcohol)-(vinylamine) copolymer to the maleic anhydride moieties in the copolymer with maleic anhydride. Accordingly, the ratio of the number of the vinylamine units (II) in the (vinyl alcohol)-(vinylamine) copolymer to the number of the maleic anhydride moieties (VII) in the copolymer with maleic anhydride is preferably from 10,000:1 to 20:1. When the proportion of the units (II) is smaller than (II):(VII), the number of cross-linking sites can be increased, and when a film is to be formed later, a film having a high degree of cross-linking will be obtained, whereby gas barrier properties in high humidity tend to be high. More preferably, the proportion of the units (II) is smaller than (II):(VII)=1,000:1, furthermore preferably the proportion of the units (II) is smaller than (II):(VII)=500:1.

On the other hand, when the proportion of the units (II) is larger than (II):(VII)=20:1, the viscosity of the water soluble resin composition can be appropriately suppressed, whereby application to a substrate tends to be easy, and further, the cross-linking reaction rate can be suppressed to be within an appropriate range, whereby the cross-linking reaction will proceed while fluidity during the reaction is maintained and a state of an easily handled resin composition is maintained. More preferably, the proportion of the units (II) is larger than (II):(VII)=30:1, furthermore preferably the proportion of the units (II) is larger than (II):(VII)=40:1.

As the maleic anhydride moieties have a relatively high reactivity with amino groups, it is more preferred to add an adjustor of reaction speed. The reason, effect, preferred compounds and preferred addition amount are the same as described in the description 2-2. acetoacetylate poly(vinyl alcohol).

### 2-4. Poly(N-vinylformamide)

In the present invention, a poly(N-vinylformamide) (hereinafter referred to as PNVF) is a generic name for a homopolymer of a N-vinylformamide, a copolymer with another monomer and partial hydrolysates thereof. As a method for producing PNVF, various known methods may be employed and the method is not particularly limited, and a method as disclosed in U.S.P. 4,421,602 may, for example, be mentioned.

Since the (vinyl alcohol)-(vinylamine) copolymer reacts with formamide groups of PNVF under weakly acidic conditions, the cross-linking reaction is estimated to occur by a reaction of the amino groups in the (vinyl alcohol)-(vinylamine) copolymer with the formamide groups. Accordingly, the degree of cross-linking is considered to be determined by the ratio of the vinylamine moieties in the (vinyl alcohol)-(vinylamine) copolymer to the formamide groups in PNVF. Accordingly, the ratio of the number of the vinylamine units (II) in the (vinyl alcohol)-(vinylamine) copolymer to the number of formamide moieties (VIII) in PNVF is preferably from 20:1 to 1:20. When the proportion of the units (II) is smaller than (II):(VIII)=20:1, the number of cross-linking sites can be increased, and when a film is to be formed later, a film having a high degree of cross-linking will be obtained, whereby gas barrier properties in high humidity tend to be high. More preferably, the proportion of the units (II) is smaller than (II) : (VIII)=15:1, furthermore preferably the proportion of the units (II) is smaller than (II):(VIII)=10:1.

On the other hand, when the proportion of the units (II) is larger than (II):(VIII)=1:20, the viscosity of the water soluble resin composition can be appropriately suppressed, whereby application to a substrate tends to be easy, and further, the cross-linking reaction rate can be suppressed to be within an appropriate range, whereby the cross-linking reaction will proceed while fluidity during the reaction is maintained and a state of an easily handled resin composition is maintained. More preferably, the proportion of the units (II) is larger than (II):(VIII)=1:15, furthermore preferably the proportion of the units (II) is larger than (II):(VIII)=1:10.

Further, it is more preferred to add an adjustor of reaction speed. The adjustor of reaction speed is preferably an acid to the extent of maintaining the reaction system to be in weakly acidic conditions, since the cross-linking reaction is considered to proceed at an appropriate rate by letting carbonyl carbon in the formamide moieties in the poly(N-vinylformamide) be slightly positively charged, while maintaining nucleophilic properties of the vinylamine moieties in the (vinyl alcohol)-(vinylamine) copolymer. Preferred is acetic acid or phosphoric acid, and most preferred is acetic acid. The amount of the adjustor of reaction speed added is usually from 1 to 100 mol%, preferably from 50 to 100 mol%, furthermore preferably from 70 to 100 mol%, based on the vinylamine units (II).

### 2-5. Multifunctional ester

In the present invention, a multifunctional ester is a compound having two or more ester groups in one molecule. The multifunctional ester to be used in the present invention is preferably water soluble by itself, and if it is not the case, a transparent film has to be provided after the water soluble resin composition with the (vinyl alcohol)-(vinylamine) copolymer is applied on a substrate and dried.

For example, dioctyl phthalate is not water soluble, but a water soluble resin composition with the (vinyl alcohol)-(vinylamine) copolymer becomes transparent and uniform as the cross-linking reaction proceeds, and after the composition is applied to a substrate and dried, a transparent film will be obtained. Dioctyl phthalate is widely used as a plasticizer for polyvinyl chloride and has high safety and is thereby preferably used.

Further, a partially saponified poly(vinyl alcohol) may also be used. The partially saponified poly(vinyl alcohol) is usually one obtained by partially saponifying polyvinyl acetate, and a typical example may be a copolymer comprising about 88 mol% of vinyl alcohol moieties and about 12 mol% of vinyl acetate moieties. Such a partially saponified poly(vinyl alcohol) is sufficiently water soluble and has high safety and is thereby preferably used.

### 3. Change in viscosity of water soluble resin composition

Now, the reason why the change in viscosity at the time of the cross-linking reaction was noticed in the present invention will be described below.

As described above, in order that a gas barrier film has high gas barrier properties even in high humidity, it is required to appropriately cross-link the (vinyl alcohol)-(vinylamine) copolymer so that the hydrogen bonds will not be broken and the crystal structures will not be loosened in high humidity. Usually, since the viscosity tends to increase as the cross-linking proceeds, the degree of the cross-linking reaction can be estimated by paying attention to the change in viscosity of the composition.

In view of improvement in the gas barrier properties of the gas barrier film, it is preferred that the cross-linking reaction of the water soluble resin composition quickly proceeds, whereby a sufficiently cross-linked composition is applied to a substrate. Accordingly, the rate of the increase in viscosity of the composition is preferably high to a certain extent. Therefore, when an aqueous solution containing the water soluble resin composition is prepared to be an aqueous solution having a concentration of the (vinyl alcohol)-(vinylamine) copolymer of 10 mass%, the increase in viscosity after the aqueous solution is held at 60°C for 3 hours is preferably at least 0.2 time relative to the viscosity immediately after the preparation. Namely, the viscosity after the aqueous solution is held at 60°C for 3 hours is preferably at least 1.2 times the viscosity immediately after the preparation. Each viscosity is a value measured in accordance with ISO 3219 at 25°C.

When a gas barrier film is to be obtained, usually the resin composition is applied to a substrate and dried by heating to form a film. If the viscosity is too high when the resin composition is applied, handling in a coating step tends to be difficult such that no film having a uniform thickness can be obtained because the resin composition can not be applied or the thickness is uneven even though the resin composition can be applied. Therefore, a gas barrier film having favorable characteristics can hardly be obtained. Accordingly, the rate of the increase in viscosity accompanying the cross-linking reaction is preferably low to a certain extent. Further, a too high viscosity increasing rate leads to a short usable life (pot life) of the composition, and such is unfavorable in this view also. Accordingly, when an aqueous solution containing the water soluble resin composition is prepared under the above conditions, the increase in viscosity after the aqueous solution is held at 60°C for 3 hours is at most 50 times relative to the viscosity immediately after the preparation.

Since the viscosity of the water soluble resin composition may vary depending upon the concentration of the (vinyl alcohol)-(vinylamine) copolymer, the temperature and the time for the cross-linking reaction, etc., such conditions have to be constant when the change in viscosity is observed.

Practically, a film for a gas barrier film is formed at a high temperature of at least the boiling point of water in an extremely short period in many cases, and it tends to be difficult to observe the viscosity of the composition. Accordingly, as a result of studies by the present inventors, the observation to determine the preferred range of the change in viscosity of the water soluble resin composition is carried out under the above conditions.

In order that the change in viscosity is to be within an appropriate range, the type, concentration and addition amount of an appropriate cross linker, necessity of addition of an adjuster of reaction speed and its type and addition amount, etc. are adjusted. For example, when the viscosity increasing rate is to be high, a cross linker which is more likely to react with amino groups may be selected, or its addition amount may be increased. In a case where the viscosity increasing rate is to be low, a cross linker which is less likely to react with amino groups may be selected, its addition amount may be decreased, or an adjustor of reaction speed which suppresses the cross-linking reaction may be added.

### 4. Gas barrier film and packaging material

A film can be formed by applying the water soluble resin composition of the present invention to a substrate and drying it by heating. The film has gas barrier properties considered to originate from the vinyl alcohol units in the (vinyl alcohol)-(vinylamine) copolymer. When it is used as a gas barrier film, the substrate is preferably a polymer resin substrate in view of processability and transparency.

The polymer resin substrate is in the form of a sheet or a film, and it is made of preferably a polyester, a polyolefin or a polyamide in view of transparency, cost, flexibility and low toxicity. More preferably, the polyester is a polyethylene terephthalate, the polyolefin is a polyethylene or a polypropylene, and the polyamide is nylon-6 or nylon-66, etc.

To the polymer resin substrate, a known additive such as an anti-static agent, a UV absorber, a plasticizer, a lubricant or a colorant may be added as the case requires.

The thickness of the polymer resin substrate may optionally be determined depending upon the purpose of use, and it is usually at least 1 µm, preferably at least 2 µm, considering mechanical strength. However, it is usually at most 100 µm, more preferably at most 50 µm, considering flexibility and transparency. Such a substrate can be produced by a known method. For example, a resin material is melted in an extruder, extruded from a die and quenched to obtain a substantially amorphous non-oriented non-stretched substrate.

The polymer resin substrate may be used as it is not stretched, or a preliminarily stretched one may be used. As a stretching method, any known method of stretching the polymer resin substrate in a direction of flow of the substrate (longitudinal direction) or a direction at right angles to the direction of flow of the substrate (lateral direction) may be employed, and uniaxial drawing, tenter successive biaxial stretching, tenter simultaneous biaxial stretching or tubular biaxial stretching may, for example, be mentioned. The stretching temperature depends on the polymer substrate to be used, and it is considered to be preferably about 160°C in the case of a polypropylene or from about 210 to about 230°C in the case of a polyethylene terephthalate. The time for stretching is usually from several seconds to about 10 seconds.

It is preferred to apply the water soluble resin composition to a non-stretched substrate and then to stretch the substrate, whereby a drying step of vaporizing water from the water soluble resin composition can be simultaneously carried out by heat generated by the stretching. Further, the cross-linking reaction of the water soluble resin composition after application will be accelerated. Further, by the heat, the direction of the (vinyl alcohol)-(vinylamine) copolymer tends to be uniform and the copolymer tends to be regularly arranged, whereby crystal structures derived from hydrogen bonds between hydroxyl groups are more likely to be formed, and further improvement in the gas barrier properties of the film can be expected. By such a method, advantages such that the resin composition of the present invention is water soluble and can be used as an aqueous solution can be made the most of.

Coating conditions such as coating method, concentration, temperature and humidity when the water soluble resin composition is applied, and drying conditions such as drying method, temperature, humidity and time at the time of drying by heating, may optionally be selected depending upon the purpose and are not particularly limited. As a coating method, a known method by e.g. a reverse-roll coater, a gravure coater, a roll-knife coater or an air doctor coater may, for example, be employed. As a drying method after coating, a known drying method such as hot air drying, heated roll drying or infrared drying may be employed, and as described above, drying may be carried out simultaneously with stretching of the polymer resin substrate. The temperature for coating and drying by heating is preferably as high as possible so as to quickly remove water from the surface of the polymer resin substrate and is usually at least the boiling point of water, but is set to be lower than the melting point of the substrate.

Further, in production of the gas barrier film of the present invention, in order to improve adhesion between the polymer resin substrate and the film to be formed by the coating, a corona treatment may be preliminarily applied to the surface of the polymer resin substrate, or an undercoat layer made of a polyester resin, a cellulose resin, a poly(vinyl alcohol) resin, a urethane resin, a polyvinylidene chloride resin or the like may be formed between the substrate and the film. The (vinyl alcohol)-(vinylamine) copolymer has relatively excellent adhesion to a polyester represented by a polyethylene terephthalate, and when a film is to be formed by applying the water soluble resin composition of the present invention to a polyethylene terephthalate substrate, followed by drying by heating, usually adhesion to such an extent that the film will not be peeled off just when the film is bent, will be obtained, even if no undercoat layer is formed. It is estimated that a certain bond is formed between the (vinyl alcohol)-(vinylamine) copolymer and the ester bond of the polyethylene terephthalate.

The thickness of the film made of the water soluble resin composition of the present invention is optional but is preferably at least 0.01 µm so as to obtain sufficient gas barrier properties. However, it is usually preferably at most 2 µm, more preferably at most 1 µm, in view of easiness of coating to form a film, securement of adhesion to the polymer resin substrate, prevention of fracture of the film, etc.

It is also possible to form a deposited layer on the gas barrier film of the present invention so as to further increase the gas barrier properties. The material to be deposited and the method are not particularly limited, and known methods as disclosed in U.S.P. 5,589,252 (Japanese Patent No. 2790054) and JP-A-7-266484 (Japanese Patent No. 3221221) may, for example, be employed.

For the gas barrier film of the present invention, an optional layer may be formed as an upper or lower layer or as an interlayer as the case requires.

The packaging material of the present invention is characterized by comprising the above-described gas barrier film, and as the case requires, a printing layer, a heat-sealable thermoplastic resin layer or the like may be laminated on the gas barrier film. Further, a plurality of resin layers may be laminated on the gas barrier layer via an adhesive layer.

As a printing ink to be printed on the printing layer, an aqueous or solvent type resin-containing printing ink may be used. As the resin to be used for the printing ink, for example, an acrylic resin, a urethane resin, a polyester resin, a vinyl acetate copolymer resin or a mixture thereof may be used. Further, to the printing ink, a known additive such as an anti-static agent, a shading agent, a UV absorber, a plasticizer, a lubricant, a filler, a colorant or a stabilizer may be added. The printing method to form the printing layer is not particularly limited, and a known method such as an offset printing method, a gravure printing method or a screen printing method may be employed.

As the heat-sealable thermoplastic resin, for example, a known resin such as a polyethylene resin, a polypropylene resin, an (ethylene)-(vinyl acetate) copolymer, an Ionomer, or an acrylic resin may be employed.

The gas barrier film and the packaging material thus obtained have high gas barrier properties even in high humidity, have high safety and are available at a low cost since they can easily be produced, and they are useful for various applications such as food application, medicine application and industrial application.

Now, the present invention will be described in further detail with reference to Examples. However, it should be understood that the present invention is by no means restricted to such specific Examples, and various changes and modifications are possible without departing from the intension and the scope of the present invention. In the following, "%" and "part(s)" are as calculated as mass unless otherwise specified.

### (1) Viscosity

Part of a composition was sampled and cooled to 25°C, and its viscosity was measured in accordance with ISO 3219 at 25°C.

### (2) Gas barrier properties (oxygen barrier properties)

The oxygen permeability was measured by means of an oxygen permeation rate testing apparatus OXTRAN 2/20 (manufactured by MOCON, Inc.) at 23°C in a humidity of 90%.

### EXAMPLE 1

### ((Vinyl alcohol)-(vinylamine) copolymer)

As a (vinyl alcohol)-(vinylamine) copolymer, one prepared by a method as disclosed in US-A-2005-0043472 (JP-A-2004-51950) was used. As estimated from the proton integral ratio in ¹H-NMR, in the copolymer used, the ratio of the vinyl alcohol units (I) to the vinylamine units (II) was (I):(II)=89.2:10.8 (molar ratio). No units represented by the formula (III) were observed.

### (Polyamide-epichlorohydrin resin)

As a polyamide-epichlorohydrin resin, WS4020 (aqueous solution having a solid content of 25%) manufactured by SEIKO PMC Corporation was employed. This resin is obtained by denaturing by epichlorohydrin a polyamide formed by copolymerizing adipic acid with diethylenetriamine.

### (Water soluble resin composition)

150 g of a 10% aqueous solution of the above (vinyl alcohol)-(vinylamine) copolymer and 0.6 g of the above polyamide-epichlorohydrin resin aqueous solution (0.6 g as WS4020 (aqueous solution having a solid content of 25%) manufactured by SEIKO PMC Corporation) were mixed and stirred while maintaining the temperature at 60°C to prepare a water soluble resin composition. This water soluble resin composition had a solid content of 10%.

The ratio of the number of the vinylamine units (II) in the (vinyl alcohol)-(vinylamine) copolymer to the number of multiamine moieties (diethylenetriamine moieties) in the polyamide-epichlorohydrin resin was 100:1. Namely, the resin composition contained 1 equivalent amount of the multiamine moieties in the polyamide-epichlorohydrin resin per 100 equivalent amounts of the vinylamine units (II) in the copolymer.

### (Tracing of cross-linking reaction of water soluble resin composition)

The viscosity of the water soluble resin composition immediately after mixing was measured and found to be 696 mPa·s, and it was 1,106, 1,659 and 2,632 mPa·s 30 minutes later, 1 hour later and 2 hours later, respectively. After the resin composition was held at 60°C for 3 hours after mixing, the viscosity was 6,195 mPa.s and increased by 7.9 times based on the viscosity immediately after mixing. It was found that the cross-linking reaction proceeded while fluidity was maintained and a state of an easily handled resin composition was maintained during this time period.

### (Preparation of gas barrier film)

The water soluble resin composition (viscosity: 1,659 mPa.s) after held at 60°C for 1 hour after mixing, was applied to a PET film (corona treatment applied thereto) with a thickness of 50 µm by means of a #7 bar coater, and dried at 120°C for 30 seconds to form a film.

### (Appearance of gas barrier film)

The appearance and transparency of the obtained gas barrier film were evaluated by visual observation and as a result, the film was a colorless and transparent film having a uniform appearance.

### (Measurement of gas barrier properties)

The oxygen barrier properties were measured and as a result, the oxygen permeability was 0.60 cm³/m²·day·atm. Accordingly, the gas barrier film was found to have very high gas barrier properties even in high humidity.

### EXAMPLE 2

A gas barrier film was prepared in the same manner as in Example 1 except that in Preparation of the gas barrier film, a polypropylene film with a thickness of 50 µm was employed instead of the PET film. The appearance and transparency of the obtained gas barrier film were evaluated by visual observation and as a result, the film was a colorless and transparent film having a uniform appearance.

### EXAMPLE 3

150 g of a 10% aqueous solution of the above (vinyl alcohol)-(vinylamine) copolymer and 0.08 g of the above polyamide-epichlorohydrin resin aqueous solution (0.08 g as WS4020 (aqueous solution having a solid content of 25%) manufactured by SEIKO PMC Corporation) were mixed and stirred while maintaining the temperature at 60°C to prepare a water soluble resin composition. This water soluble resin composition had a solid content of 10%.

The ratio of the number of the vinylamine units (II) in the (vinyl alcohol)-(vinylamine) copolymer to the number of multiamine moieties (diethylenetriamine moieties) in the polyamide-epichlorohydrin resin was 700:1. Namely, the resin composition contained 1 equivalent amount of the multiamine moieties in the polyamide-epichlorohydrin resin per 700 equivalent amounts of the vinylamine units (II) in the copolymer.

The viscosity of the water soluble resin composition immediately after mixing was 681 mPa.s, and it was 748, 794 and 922 mPa.s 30 minutes later, 1 hour later and 2 hours later, respectively. After the resin composition was held at 60°C for 3 hours after mixing, the viscosity was 942 mPa.s and increased by 0.38 time based on the viscosity immediately after mixing. It was found that the cross-linking reaction proceeded while fluidity was maintained and a state of an easily handled resin composition was maintained during this time period.

A gas barrier film was obtained in the same manner as in Example 1. The appearance and transparency of the film were evaluated by visual observation and as a result, the film was a colorless and transparent film having a uniform appearance.

### EXAMPLE 4

### (Acetoacetylated poly(vinyl alcohol))

An acetoacetylated poly(vinyl alcohol) (GOHSEFIMER Z-100 manufactured by Nippon Synthetic Chemical Industry Co., Ltd.) was dissolved in water to prepare a 10 mass% aqueous solution.

### (Water soluble resin composition)

To 150 g of a 10% aqueous solution of the above (vinyl alcohol)-(vinylamine) copolymer, 2.1 g of acetic acid was added as an adjustor of reaction speed, and 6.6 g of the above acetoacetylated poly(vinyl alcohol) aqueous solution was added, followed by stirring while maintaining the temperature at 60°C, to prepare a water soluble resin composition. This water soluble resin composition had a solid content of 10%.

The ratio of the number of the vinylamine units (II) in the (vinyl alcohol)-(vinylamine) copolymer to the number of acetoacetyl moieties in the acetoacetylated poly(vinyl alcohol) was 72:1. Namely, the resin composition contained 1 equivalent amount of the acetoacetyl moieties in the acetoacetylated poly(vinyl alcohol) per 72 equivalent amounts of the vinylamine units (II) in the copolymer. Further, the amount of acetic acid as the adjustor of reaction speed was 85 mol% based on the amount of the vinylamine units (II) in the (vinyl alcohol)-(vinylamine) copolymer.

### (Tracing of cross-linking reaction of water soluble resin composition

The viscosity of the water soluble resin composition was 717 mPa·s immediately after mixing, and it was 995 mPa.s after the resin composition was held at 60°C for 3 hours after mixing, and increased by 0.39 time based on the viscosity immediately after mixing. It was found that the cross-linking reaction proceeded while fluidity was maintained and a state of an easily handled resin composition was maintained during this time period.

### EXAMPLE 5

### (Copolymer with maleic anhydride)

A (methyl vinyl ether)-(maleic anhydride) alternating copolymer (manufactured by Aldrich, weight average molecular weight:216,000, number average molecular weight:80,000) was dissolved in water to prepare a 10 mass% aqueous solution.

### (Water soluble resin composition)

To 150 g of a 10% aqueous solution of the above (vinyl alcohol)-(vinylamine) copolymer, 2.2 g of acetic acid was added as an adjustor of reaction speed, and 0.98 g of the above (methyl vinyl ether)-(maleic anhydride) alternating copolymer aqueous solution was added, followed by stirring while maintaining the temperature at 60°C to prepare a water soluble resin composition. This water soluble resin composition had a solid content of 10%.

The proportion of the number of the vinylamine units (II) in the (vinyl alcohol)-(vinylamine) copolymer to the number of maleic anhydride moieties in the (methyl vinyl ether)-(maleic anhydride) alternating copolymer was 65:1. Namely, the resin composition contained 1 equivalent amount of maleic anhydride moieties in the (methyl vinyl ether)-(maleic anhydride) alternating copolymer per 65 equivalent amounts of the vinylamine units (II) in the copolymer. Further, the amount of acetic acid as the adjustor of reaction speed was 100 mol% based on the amount of the vinylamine units (II) in the (vinyl alcohol)-(vinylamine) copolymer.

### (Tracing of cross-linking reaction of water soluble resin composition)

The viscosity of the water soluble resin composition was 425 mPa·s immediately after mixing, and it was 594 mPa·s after the resin composition was held at 60°C for 3 hours after mixing, and increased by 0.40 time based on the viscosity immediately after mixing. It was found that the cross-linking reaction proceeded while fluidity was maintained and a state of an easily handled resin composition was maintained during this time period.

### EXAMPLE 6

### (Copolymer with maleic anhydride)

One having part of an (isobutylene)-(maleic anhydride) alternating copolymer converted into an ammonium salt (manufactured by Aldrich, molecular weight:about 60,000) was dissolved in water to prepare a 10% aqueous solution.

### (Water soluble resin composition)

To 150 g of a 10% aqueous solution of the above (vinyl alcohol)-(vinylamine) copolymer, 0.90 g of the above aqueous solution of the "one having part of an (isobutylene)-(maleic anhydride) alternating copolymer converted into an ammonium salt" was added, followed by stirring while maintaining the temperature at 60°C, to prepare a water soluble resin composition. This water soluble resin composition had a solid content of 10%.

The ratio of the number of the vinylamine units (II) in the (vinyl alcohol)-(vinylamine) copolymer to the number of maleic anhydride moieties in the "one having part of an (isobutylene)-(maleic anhydride) alternating copolymer converted into an ammonium salt" was 69:1. Namely, the resin composition contained 1 equivalent amount of maleic anhydride moieties in the "one having part of an (isobutylene)-(maleic anhydride) alternating copolymer converted into an ammonium salt" per 69 equivalent amounts of the vinylamine units (II) in the copolymer.

### (Tracing of cross-linking reaction of water soluble resin composition)

The viscosity of the water soluble resin composition was 735 mPa·s immediately after mixing, and it was 1,114 mPa·s after the resin composition was held at 60°C for 3 hours after mixing, and increased by 0.52 time based on the viscosity immediately after mixing. It was found that the cross-linking reaction proceeded while fluidity was maintained and a state of an easily handled resin composition was maintained during this time period.

### EXAMPLE 7

### (Poly(N-vinylformamide))

As a poly(N-vinylformamide), PNVF-500 (30 mass% aqueous solution) manufactured by Dia-Nitrix Co., Ltd. was employed.

### (Water soluble resin composition)

To 150 g of a 10% aqueous solution of the above (vinyl alcohol)-(vinylamine) copolymer, 2.0 g of acetic acid was added as an adjuster of reaction speed, and 3.05 g of the above poly(N-vinylformamide) aqueous solution was further added, followed by stirring while maintaining the temperature at 60°C to prepare a water soluble resin composition. This water soluble resin composition had a solid content of 10%.

The ratio of the number of the vinylamine units (II) in the (vinyl alcohol)-(vinylamine) copolymer to the number of formamide moieties in the poly(N-vinylformamide) was 1:1.2. Namely, the resin composition contained 1.2 equivalent amounts of formamide moieties in the poly(N-vinylformamide) per 1 equivalent amount of the vinylamine units (II) in the copolymer. The amount of acetic acid as the adjustor of reaction speed was 90 mol% based on the amount of the vinylamine units (II) in the (vinyl alcohol)-(vinylamine) copolymer.

### (Tracing of cross-linking reaction of water soluble resin composition)

The viscosity of the water soluble resin composition was 522 mPa·s immediately after mixing, and it was 640 mPa·s after the resin composition was held at 60°C for 3 hours after mixing, and increased by 0.23 time based on the viscosity immediately after mixing. It was found that the cross-linking reaction proceeded while fluidity was maintained and a state of an easily handled resin composition was maintained during this time period.

### EXAMPLE 8

### (Water soluble resin composition)

To 150 g of a 10% aqueous solution of the above (vinyl alcohol)-(vinylamine) copolymer, 0.3 g of dioctyl phthalate was added as a multifunctional ester, followed by stirring while maintaining the temperature at 60°C to prepare a water soluble resin composition. This water soluble resin composition had a solid content of 10%.

The ratio of the number of the vinylamine units (II) in the (vinyl alcohol)-(vinylamine) copolymer to the number of ester moieties in dioctyl phthalate was 1:49. Namely, the resin composition contained 49 equivalent amounts of ester moieties in dioctyl phthalate per 1 equivalent amount of the vinylamine units (II) in the copolymer.

### (Tracing of cross-linking reaction of water soluble resin composition)

The viscosity of the water soluble resin composition was 753 mPa·s immediately after mixing, and it was 1.037 mPa·s after the resin composition was held at 60°C for 3 hours after mixing, and increased by 0.38 time based on the viscosity immediately after mixing. It was found that the cross-linking reaction proceeded while fluidity was maintained and a state of an easily handled resin composition was maintained during this time period.

### COMPARATIVE EXAMPLE 1

150 g of a 10% aqueous solution of the above (vinyl alcohol)-(vinylamine) copolymer and one having 6.0 g of the above polyamide-epichlorohydrin resin (6.0 g as WS4020 (aqueous solution having a solid content of 25%) manufactured by SEIKO PMC Corporation) diluted with 9.0 g of water, were mixed and stirred while maintaining the temperature at 60°C to prepare a water soluble resin composition. This water soluble resin composition had a solid content of 10%.

In the water soluble resin composition, the ratio of the number of the vinylamine units (II) in the (vinyl alcohol)-(vinylamine) copolymer to the number of multiamine moieties (diethylenetriamine moieties) in the polyamide-epichlorohydrin resin was 10:1. Namely, the resin composition contained 1 equivalent amount of multiamine moieties in the polyamide-epichlorohydrin resin per 10 equivalent amounts of the vinylamine units (II) in the copolymer.

The viscosity of the water soluble resin composition was 717 mPa·s immediately after mixing, and it was 3,226 mPa·s 10 minutes later. Further, the entire system gelated within another 10 minutes, and the viscosity was too high and could not be measured. The resin composition could not be applied to a polymer resin substrate.

### COMPARATIVE EXAMPLE 2

A gas barrier film was obtained in the same manner as in Example 1 except that a 10% aqueous solution of the above (vinyl alcohol)-(vinylamine) copolymer alone was applied to a PET film (corona treatment applied thereto) with a thickness of 50 µm by means of a #7 bar coater and dried at 120°C for 30 seconds to form a film. The appearance was evaluated and as a result, the film was a colorless and transparent film having a uniform appearance.

The oxygen barrier properties were measured and as a result, the oxygen permeability was 30 cm³/m²·day·atm. The oxygen permeability in high humidity was high, and the gas barrier properties were insufficient.

### COMPARATIVE EXAMPLE 3: Melamine resin was used as cross linker

A melamine resin (hexamethylolmelamine) was prepared (its preparation method was in accordance with Experimental Chemistry, fourth edition, The Chemical Society of Japan, vol. 28, page 431).

To 150 g of a 10% aqueous solution of the above (vinyl alcohol)-(vinylamine) copolymer, 4.7 g of the above melamine resin was added and mixed, and 4.6 g of phosphoric acid was added to adjust the pH at 2.5, followed by stirring while maintaining the temperature at 60°C to prepare a water soluble resin composition.

The viscosity of the water soluble resin composition was 635 mPa·s immediately after mixing, and it was 704 mPa·s after the resin composition was held at 60°C for 3 hours. The viscosity increased only by 11% (0.11 time) based on the viscosity immediately after mixing.

### COMPARATIVE EXAMPLE 4: Glyoxal was used as cross linker

To 150 g of a 10% aqueous solution of the above (vinyl alcohol)-(vinylamine) copolymer, 4.6 g of phosphoric acid was added to adjust the pH at 2.5, and 3.3 g of a 40% glyoxal aqueous solution was added while maintaining the temperature at 60°C to prepare a water soluble resin composition.

The viscosity of the water soluble resin composition was 402 mPa·s immediately after mixing. After the resin composition was held at 60°C for 5 minutes, the resin composition gelated, and the viscosity could not be measured.

As described above, the water soluble resin composition of the present invention comprises a resin expected to have high safety, and is easily handled. Further, a gas barrier film having high gas barrier properties even in high humidity and having high safety, and a packaging material employing it, can be provided by applying an aqueous solution of the resin composition to a polymer resin substrate, followed by drying by heating to form a film. Accordingly, the present invention is extremely highly industrially applicable.

## Claims

1. A water soluble resin composition containing a (vinyl alcohol)-(vinylamine) copolymer having units represented by the formulae (I) and (II) (hereinafter referred to as vinyl alcohol units (I) and vinylamine units (II)) and a cross linker having functional groups capable of reacting with amino groups, wherein when an aqueous solution containing the water soluble resin composition is prepared to be an aqueous solution having a concentration of the copolymer of 10 mass%, the viscosity (the viscosity measured in accordance with ISO 3219 at 25°C) after the aqueous solution is held at 60°C for 3 hours, increases by at least 0.2 time and at most 50 times, based on the viscosity immediately after the preparation:

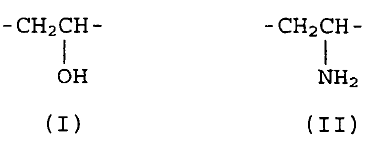

2. The water soluble resin composition according to Claim 1, wherein in the copolymer, the content ratio of the vinyl alcohol units (I) to the vinylamine units (II) is such that (I):(II)=99:1 to 50:50 (molar ratio).

3. The water soluble resin composition according to Claim 1 or 2, wherein the copolymer contains units represented by the formula (III):

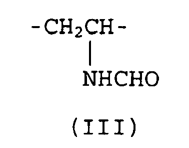

4. The water soluble resin composition according to any one of Claims 1 to 3, which contains an adjuster of reaction speed.

5. The water soluble resin composition according to any one of Claims 1 to 4, wherein the cross linker has, in one molecule, at least two functional groups capable of reacting with amino groups selected from the group consisting of groups formed by a reaction of a secondary amino group with epichlorohydrin, acetoacetyl groups, acid anhydride groups, formamide groups and ester groups.

6. A water-soluble resin composition containing a (vinyl alcohol)-(vinylamine) copolymer having vinyl alcohol units (I) and vinylamine units (II) and a cross linker having at least two functional groups capable of reacting with amino groups of the copolymer, selected from the group consisting of groups formed by a reaction of a secondary amino group with epichlorohydrin, acetoacetyl groups, acid anhydride groups, formamide groups and ester groups, wherein the ratio of the number of the vinylamine units (II) in the copolymer to the total number of the groups formed by a reaction of a secondary amino group with epichlorohydrin, the acetoacetyl groups, and the acid anhydride groups in the cross linker is from 10,000:1 to 20:1; and the ratio of the number of the vinylamine units (II) in the copolymer to the number of the formamide groups in the cross linker is from 20:1 to 1:20.

7. The water soluble resin composition according tc any one of Claims 1 to 6, wherein the cross linker is a polyamide-epichlorohydrin resin.

8. The water soluble resin composition according to Claim 7, wherein the polyamide-epichlorohydrin resin is one obtained by denaturing by epichlorohydrin a polyamide formed by copolymerizing adipic acid with diethylenetriamine.

9. A process for producing the water soluble resin composition as defined in Claim 8, which comprises denaturing a polyamide formed by copolymerizing adipic acid with diethylenetriamine by epichlorohydrin to obtain the polyamide-epichlorohydrin resin, and mixing it with the (vinyl alcohol)-(vinylamine) copolymer having vinyl alcohol units (I) and vinylamine units (II).

10. The water soluble resin composition according to Claim 7 or 8, wherein the ratio of the number of the vinylamine units (II) in the copolymer to the number of multiamine moieties in the polyamide-epichlorohydrin resin is from 10,000:1 to 20:1.

11. The water soluble resin composition according to any one of Claims 1 to 6, wherein the cross linker is an acetoacetylated poly(vinyl alcohol).

12. The water soluble resin composition according to Claim 11, wherein the ratio of the number of the vinylamine units (II) in the copolymer to the number of acetoacetyl moieties in the acetoacetylated poly(vinyl alcohol) is from 10,000:1 to 20:1.

13. The water soluble resin composition according to any one of Claims 1 to 6, wherein the cross linker is a copolymer with maleic anhydride.

14. The water soluble resin composition according to Claim 13, wherein the copolymer with maleic anhydride is at least one member selected from the group consisting of an alternating copolymer of methyl vinyl ether with maleic anhydride, an alternating copolymer of isobutylene with maleic anhydride, and their salts.

15. The water soluble resin composition according to Claim 13 or 14, wherein the ratio of the number of the vinylamine units (II) in the copolymer to the number of maleic anhydride moieties in the copolymer with maleic anhydride is from 10,000:1 to 20:1.

16. The water soluble resin composition according to any one of Claims 1 to 6, wherein the cross linker is a poly(N-vinylformamide) or its copolymer.

17. The water soluble resin composition according to Claim 16, wherein the ratio of the number of the vinylamine units (II) in the copolymer to the number of formamide moieties in the poly(N-vinylformamide) or its copolymer is from 20:1 to 1:20.

18. The water soluble resin composition according to any one of Claims 1 to 6, wherein the cross linker is a multifunctional ester.

19. A gas barrier film, which is formed by applying an aqueous solution of the water soluble resin composition as defined in any one of Claims 1 to 8 and 10 to 18, to at least one surface of a polymer resin, followed by drying by heating to form a film.

20. The gas barrier film according to Claim 19, wherein the polymer resin substrate is made of a polyethylene terephthalate.

21. The gas barrier film according to Claim 19, wherein the polymer resin substrate is made of a polyolefin.

22. A process for producing a gas barrier film, which comprises applying an aqueous solution of the water soluble resin composition as defined in any one of Claims 1 to 8 and 10 to 18 to at least one surface of a polymer resin substrate, followed by drying by heating to form a film.

23. A packaging material comprising the gas barrier film as defined in any one of Claims 19 to 21.

## Patentansprüche

1. Wasserlösliche Harzzusammensetzung, enthaltend ein (Vinylalkohol)-(Vinylamin)-Copolymer mit durch die Formeln (I) und (II) dargestellten Einheiten (nachstehend als Vinylalkoholeinheiten (I) und Vinylamineinheiten (II) bezeichnet) sowie einen Vernetzer mit funktionellen Gruppen, die zur Umsetzung mit Aminogruppen in der Lage sind, worin bei Herstellung einer wässrigen Lösung, die die wasserlösliche Harzzusammensetzung enthält, als eine wässrige Lösung mit einer Konzentration des Copolymers von 10 Massen-% die Viskosität (die gemäß ISO 3219 bei 25°C gemessene Viskosität) nach Halten der wässrigen Lösung bei 60°C innerhalb von 3 Stunden um das mindestens 0,2-fache und das höchstens 50-fache steigt auf der Basis der Viskosität direkt nach der Herstellung:

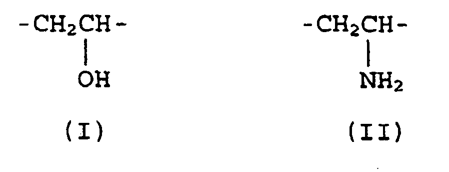

2. Wasserlösliche Harzzusammensetzung nach Anspruch 1, worin in dem Copolymer das Mengenverhältnis der Vinylalkoholeinheiten (I) zu den Vinylamineinheiten (II) derartig ist, dass (I):(II)=99:1 bis 50:50 (Molverhältnis) beträgt.

3. Wasserlösliche Harzzusammensetzung nach einem der Ansprüche 1 oder 2, worin das Copolymer durch die Formel (III) dargestellte Einheiten enthält:

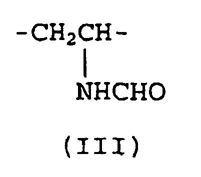

4. Wasserlösliche Harzzusammensetzung nach einem der Ansprüche 1 bis 3, welche einen Reaktionsgeschwindigkeitseinsteller enthält.

5. Wasserlösliche Harzzusammensetzung nach einem der Ansprüche 1 bis 4, worin der Vernetzer in einem Molekül mindestens zwei funktionelle Gruppen enthält, die zur Umsetzung mit Aminogruppen in der Lage sind, ausgewählt aus der Gruppe, bestehend aus Gruppen, gebildet durch eine Umsetzung einer sekundären Aminogruppe mit Epichlorhydrin, Acetacetylgruppen, Säureanhydridgruppen, Formamidgruppen und Estergruppen.

6. Wasserlösliche Harzzusammensetzung, enthaltend ein (Vinylalkohol)-(Vinylamin)-Copolymer mit Vinylalkoholeinheiten (I) und Vinylamineinheiten (II) sowie einen Vernetzer mit mindestens zwei funktionellen Gruppen, die zur Umsetzung mit Aminogruppen des Copolymers in der Lage sind, ausgewählt aus der Gruppe, bestehend aus Gruppen, gebildet durch eine Umsetzung einer sekundären Aminogruppe mit Epichlorhydrin, Acetacetylgruppen, Säureanhydridgruppen, Formamidgruppen und Estergruppen, worin das Verhältnis der Anzahl der Vinylamineinheiten (II) in dem Copolymer zu der Gesamtanzahl der Gruppen, gebildet durch Umsetzung einer sekundären Aminogruppe mit Epichlorhydrin, Acetacetylgruppen und Säureanhydridgruppen in dem Vernetzer von 10.000:1 bis 20:1 beträgt; und das Verhältnis von der Anzahl der Vinylamineinheiten (II) in dem Copolymer zu der Anzahl der Formamidgruppen in dem Vernetzer von 20:1 bis 1:20 reicht.

7. Wasserlösliche Harzzusammensetzung nach einem der Ansprüche 1 bis 6, worin der Vernetzer ein Polyamid-Epichlorhydrin-Harz ist.

8. Wasserlösliche Harzzusammensetzung nach Anspruch 7, worin das Polyamid-Epichlorhydrin-Harz ein solches ist, welches erhältlich ist mittels Denaturieren durch Epichlorhydrin eines durch Copolymerisation von Adipinsäure mit Diethylentriamin gebildeten Polyamids.

9. Verfahren zur Herstellung der wasserlöslichen Harzzusammensetzung, wie sie in Anspruch 8 definiert ist, welches das Denaturieren eines durch Copolymerisation von Adipinsäure mit Diethylentriamin gebildeten Polyamids durch Epichlorhydrin, um das Polyamid-Epichlorhydrin-Harz zu erhalten, sowie dessen Mischung mit dem (Vinylalkohol)-(Vinylamin)-Copolymer mit Vinylalkoholeinheiten (I) und Vinylamineinheiten (II) umfasst.

10. Wasserlösliche Harzzusammensetzung nach Anspruch 7 oder 8, worin das Verhältnis der Anzahl der Vinylamineinheiten (II) in dem Copolymer zu der Anzahl der Multiamineinheiten in dem Polyamid-Epichlorhydrin-Harz von 10.000:1 bis 20:1 reicht.

11. Wasserlösliche Harzzusammensetzung nach einem der Ansprüche 1 bis 6, worin der Vernetzer ein acetacetylierter Poly(vinylalkohol) ist.

12. Wasserlösliche Harzzusammensetzung nach Anspruch 11, worin das Verhältnis der Anzahl der Vinylamineinheiten (II) in dem Copolymer zu der Anzahl der Acetacetyleinheiten in dem acetacetylierten Poly(vinylalkohol) von 10.000:1 bis 20:1 reicht.

13. Wasserlösliche Harzzusammensetzung nach einem der Ansprüche 1 bis 6, worin der Vernetzer ein Copolymer mit Maleinsäureanhydrid ist.

14. Wasserlösliche Harzzusammensetzung nach Anspruch 13, worin das Copolymer mit Maleinsäureanhydrid mindestens ein Mitglied, ausgewählt aus der Gruppe, bestehend aus einem alternierenden Copolymer von Methylvinylether mit Maleinsäureanhydrid, einem alternierenden Copolymer von Isobutylen mit Maleinsäureanhydrid und deren Salzen ist.

15. Wasserlösliche Harzzusammensetzung nach Anspruch 13 oder 14, worin das Verhältnis der Anzahl der Vinylamineinheiten (II) in dem Copolymer zu der Anzahl der Maleinsäureanhydrideinheiten in dem Copolymer mit Maleinsäureanhydrid von 10.000:1 bis 20:1 reicht.

16. Wasserlösliche Harzzusammensetzung nach einem der Ansprüche 1 bis 6, worin der Vernetzer ein Poly(N-vinylformamid) oder dessen Copolymer ist.

17. Wasserlösliche Harzzusammensetzung nach Anspruch 16, worin das Verhältnis der Anzahl der Vinylamineinheiten (II) in dem Copolymer zu der Anzahl der Formamideinheiten in dem Poly(N-vinylformamid) oder dessen Copolymer von 20:1 bis 1:20 reicht.

18. Wasserlösliche Harzzusammensetzung nach einem der Ansprüche 1 bis 6, worin der Vernetzer ein multifunktioneller Ester ist.

19. Gasbarrierefolie, welche durch Auftragen einer wässrigen Lösung der wasserlöslichen Harzzusammensetzung, wie sie in einem der Ansprüche 1 bis 8 und 10 bis 18 definiert ist, auf mindestens eine Oberfläche eines Polymerharzes, gefolgt von Trocknen durch Erwärmen unter Bildung einer Folie gebildet ist.

20. Gasbarrierefolie nach Anspruch 19, worin das Polymerharzsubstrat aus einem Polyethylenterephthalat hergestellt ist.

21. Gasbarrierefolie nach Anspruch 19, worin das Polymerharzsubstrat aus einem Polyolefin hergestellt ist.

22. Verfahren zur Herstellung einer Gasbarrierefolie, welches die Auftragung einer wässrigen Lösung der wasserlöslichen Harzzusammensetzung, wie sie in einem der Ansprüche 1 bis 8 und 10 bis 18 definiert ist, auf mindestens eine Oberfläche eines Polymerharzsubstrats, gefolgt von Trocknen durch Erwärmen unter Bildung einer Folie umfasst.

23. Verpackungsmaterial, welches die Gasbarrierefolie, wie sie in einem der Ansprüche 19 bis 21 definiert ist, umfasst.

## Revendications

1. Composition de résine soluble dans l'eau contenant un copolymère (alcool vinylique)-(vinylamine) ayant des motifs représentés par les formules (I) et (II) (par la suite désignés par motifs alcool vinylique (I) et motifs vinylamine (II)) et un agent de réticulation ayant des groupes fonctionnels capables de réagir avec des groupes amino, dans laquelle, lorsqu'une solution aqueuse contenant la composition de résine soluble dans l'eau est préparée pour être une solution aqueuse ayant une concentration en copolymère de 10% en masse, la viscosité (viscosité mesurée selon ISO 3219 à 25°C) après le maintien de la solution aqueuse à 60°C pendant 3 heures, augmente d'au moins 0,2 fois et d'au plus 50 fois , par rapport à la viscosité immédiatement après la préparation :

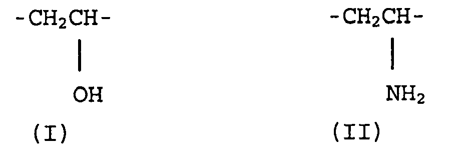

2. Composition de résine soluble dans l'eau selon la revendication 1, dans laquelle dans le copolymère, le rapport en teneur des motifs alcool vinylique (I) sur les motifs vinylamine (II) est tel que (I) : (II) = 99 :1 à 50 :50 (rapport molaire).

3. Composition de résine soluble dans l'eau selon la revendication 1 ou 2, dans laquelle le copolymère contient des motifs représentés par la formule (III) :

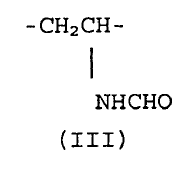

4. Composition de résine soluble dans l'eau selon l'une quelconque des revendications 1 à 3, qui contient un agent d'ajustement de la vitesse de réaction.

5. Composition de résine soluble dans l'eau selon l'une quelconque des revendications 1 à 4, dans laquelle l'agent de réticulation a, dans une molécule, au moins deux groupes fonctionnels capables de réagir avec des groupes amino, choisis dans l'ensemble constitué par des groupes formés par réaction d'un groupe amino secondaire avec l'épichlorhydrine, les groupes acétoacétyle, les groupes anhydride d'acide, les groupes formamide et les groupes ester.

6. Composition de résine soluble dans l'eau contenant un copolymère (alcool vinylique)-(vinylamine) ayant des motifs alcool vinylique (I) et des motifs vinylamine (II) et un agent de réticulation ayant au moins deux groupes fonctionnels capables de réagir avec des groupes amino du copolymère, choisis dans l'ensemble constitué par des groupes formés par réaction d'un groupe amino secondaire avec l' épichlorhydrine, les groupes acétoacétyle, les groupes anhydride d'acide, les groupes formamide et les groupes ester, dans laquelle le rapport du nombre de motifs vinylamine (II) dans le copolymère sur le nombre total des groupes formés par réaction d'un groupe amino secondaire avec l'épichlorhydrine, des groupes acétoacétyle et des groupes anhydride d'acide dans l'agent de réticulation est de 10.000 :1 à 20 :1 ; et le rapport du nombre de motifs vinylamine (II) dans le copolymère sur le nombre de groupes formamide dans l'agent de réticulation est de 20 :1 à 1 :20.

7. Composition de résine soluble dans l'eau selon l'une quelconque des revendications 1 à 6, dans laquelle l'agent de réticulation est une résine polyamide-épichlorhydrine.

8. Composition de résine soluble dans l'eau selon la revendication 7, dans laquelle la résine polyamide-épichlorhydrine est une résine obtenue en dénaturant par l'épichlorhydrine un polyamide formé par la copolymérisation de l'acide adipique avec la diéthylènetriamine.

9. Procédé de production de la composition de résine soluble dans l'eau telle que définie dans la revendication 8, qui comprend la dénaturation d'un polyamide formé par la copolymérisation de l'acide adipique avec la diéthylènetriamine par l'épichlorhydrine pour obtenir la résine polyamide-épichlorhydrine, et son mélange avec le copolymère (alcool vinylique)- (vinylamine) ayant des motifs alcool vinylique (I) et des motifs vinylamine (II).

10. Composition de résine soluble dans l'eau selon la revendication 7 ou 8, dans laquelle le rapport du nombre de motifs vinylamine (II) dans le copolymère sur le nombre de fragments multiamine dans la résine polyamide -épichlorhydrine est de 10.000 :1 à 20 :1.

11. Composition de résine soluble dans l'eau selon l'une quelconque des revendications 1 à 6, dans laquelle l'agent de réticulation est un poly(alcool vinylique) acétoacétylé.

12. Composition de résine soluble dans l'eau selon la revendication 11, dans laquelle le rapport du nombre de motifs vinylamine (II) dans le copolymère sur le nombre de fragments acétoacétyle dans le poly(alcool vinylique) acétoacétylé est de 10.000 :1 à 20 :1.

13. Composition de résine soluble dans l'eau selon l'une quelconque des revendications 1 à 6, dans laquelle l'agent de réticulation est un copolymère avec l'anhydride maléique.

14. Composition de résine soluble dans l'eau selon la revendication 13, dans laquelle le copolymère avec l'anhydride maléique est au moins un membre choisi dans le groupe constitué par un copolymère alterné de méthyl éthyl éther avec l'anhydride maléique, un copolymère alterné d'isobutylène avec l'anhydride maléique et leurs sels.

15. Composition de résine soluble dans l'eau selon la revendication 13 ou 14, dans laquelle le rapport du nombre de motifs vinylamine (II) dans le copolymère sur le nombre de fragments anhydride maléique dans le copolymère avec l'anhydride maléique est de 10.000 :1 à 20 :1.

16. Composition de résine soluble dans l'eau selon l'une quelconque des revendications 1 à 6, dans laquelle l'agent de réticulation est un poly (N-vinylformamide) ou son copolymère.

17. Composition de résine soluble dans l'eau selon la revendication 16, dans laquelle le rapport du nombre de motifs vinylamine (II) dans le copolymère sur le nombre de fragments formamide dans le poly(N-vinylformamide) ou son copolymère est de 20 :1 à 1 :20.

18. Composition de résine soluble dans l'eau selon l'une quelconque des revendications 1 à 6, dans laquelle l'agent de réticulation est un ester multifonctionnel.

19. Film formant barrière aux gaz, qui est formé en appliquant une solution aqueuse de la composition de résine soluble dans l'eau telle que définie dans l'une quelconque des revendications 1 à 8 et 10 à 18, sur au moins une surface d'une résine polymère, et en faisant suivre par un séchage par chauffage pour former un film.

20. Film formant barrière aux gaz selon la revendication 19, dans lequel le substrat de résine polymère est constitué d'un polyéthylène téréphtalate.

21. Film formant barrière aux gaz selon la revendication 19, dans lequel le substrat de résine polymère est constitué d'une polyoléfine.

22. Procédé de production d'un film formant barrière aux gaz, qui comprend l'application d'une solution aqueuse de la composition de résine soluble dans l'eau telle que définie dans l'une quelconque des revendications 1 à 8 et 10 à 18, sur au moins une surface d'un substrat de résine polymère, suivie d'un séchage par chauffage pour former un film.

23. Matériau d'emballage qui comprend le film formant barrière aux gaz tel que défini dans l'une quelconque des revendications 19 à 21.
